# EUROPEAN PATENT SPECIFICATION

(11) **EP 2 769 951 B1**
(45) Date of publication and mention of the grant of the patent: **11.10.2017**
(21) Application number: 14155854.4
(22) Date of filing: 19.02.2014
(51) Int. Cl.: B65H 75/08, B65H 54/54

(54) **A fixing assembly**
Befestigungsanordnung
Ensemble de fixation

(30) Priority: 20.02.2013 GB 201302946
(43) Date of publication of application: 27.08.2014
(73) Proprietor: Joachim Uhing GmbH & Co. KG, 24220 Flintbek (DE)
(72) Inventor: Hirt, Tobias, D-24247 Mielkendorf (DE); Isberner, Roland, D-24145 Kiel (DE)
(74) Representative: Spencer, Michael David

(56) References cited:
- DE-A1- 4 320 480
- DE-B- 1 133 949
- DE-U1-202010 015 134
- US-A- 3 396 919
- US-A1- 2007 134 061

## Description

The present invention relates to a fixing assembly, suitable for but not limited to use with winding equipment.

It is known to attach an element to a rotatable shaft. Such an element may be attached by nuts. However nuts do not aid easy attachment to and removal of the element from the shaft to position coils, gearwheels, panels etc. DE-A-4320480 discloses a quick clamping system for polished shafts. This and similar clamping systems are complex and comprise several components that are not easy to handle. Their chief advantage is that a relatively high axial force can be generated. Previously proposed fixing assemblies for releasably attaching elements to rotatable ferromagnetic shafts with a non-magnetic annular housing are described in DE 11 33 949 B and DE 20 2010 015 134 U1.

For situations not requiring such a high axial force and where easy attachment to and removal of the element from the shaft is required, the present invention seeks to provide a remedy.

Accordingly the present invention is directed to a fixing assembly for releasably attaching an element to a rotatable ferromagnetic shaft comprising a non-magnetic annular housing comprising at least one substantially diametrically opposed pair of radial bores, the bores each housing a magnet with substantially the same dimensions as the bore which is slideable within the bore, each magnet being arranged so that its end nearest the axis of the annular housing is the same pole.

Preferably, each bore is capped at the end nearest the outer surface of the annular housing.

The cap prevents the magnets from being repelled out of the assembly or falling out of the assembly when no ferromagnetic shaft is present.

When the fixing means is in use with a ferromagnetic shaft axially positioned through the centre hole of the annular housing, the magnets are each magnetically attracted to the shaft, the pairs of magnets forming a substantially symmetrical radial gripping force on the shaft.

When the fixing means is not in use i.e. no ferromagnetic shaft is present, the magnets repel each other, tending to separate them.

Advantageously there may be more than one pair of radial bores and corresponding magnets.

The axial gripping force can be influenced by the number of magnets and/or their shaping to match the surface of the shaft.

The axial gripping force can alternatively or additionally be influenced by the flux density of the magnets and/or the material of the shaft.

The magnets may be permanent or electro-magnets.

Preferably the annular housing is constructed from plastics material, aluminium or stainless steel.

An example of a fixing assembly made in accordance with the present invention will now be described hereinafter with reference to the accompanying drawings, in which:
Figure 1 is a semi-transparent perspective view of a fixing assembly with a ferromagnetic shaft present;
Figure 2 is a cross-section of the assembly with no shaft present; and
Figure 3 is a cross-section of the assembly with a ferromagnetic shaft present.

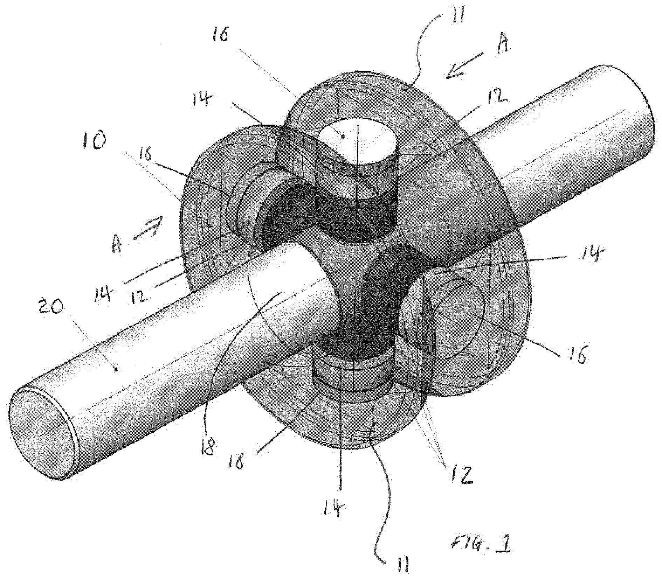

Figure 1 shows an annular housing 10 comprising two discs 11 spaced apart by a cylindrical holder 13 all of which have an axial centre hole 18 to accommodate a rotatable shaft 20. The cylindrical holder 13 has two pairs of bores 12 extending outwardly from the centre hole 18 at right angles to each other. Each bore 12 is equipped with a magnet 14 and sealed in the out direction by a cap 16. The magnets 14 have a flat outer surface which matches the inner surface of the cap 16 and a curved inner surface which is concave and matches the circumference of the rotatable shaft 20. In Figure 1 the ferromagnetic shaft 20 is positioned axially within the centre hole 18 of the housing 10. In use the magnets 14 are magnetically attracted to the shaft 20, creating a gripping force on the shaft 20, enabling the housing 10 to rotate with the shaft 20.

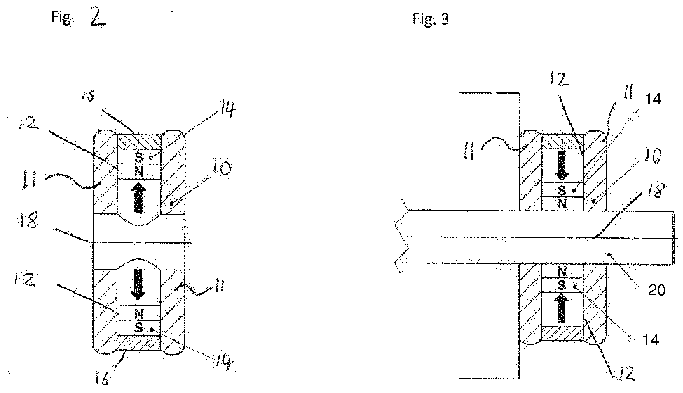

Figures 2 and 3 show a cross section along the line A-A in Figure 1. Two bores 12 can be seen between the two discs 11. The bores 12 each have at their end caps 16 and magnets 14 between the centre hole 18 and respective caps 16. In Figure 2 no ferromagnetic shaft 20 is shown, whereas in Figure 3 it is positioned within the centre hole 18 of the housing 10.

Each magnet 14 has a north pole N and a south pole S. In rest the north poles N of each magnet 14 repel each other, causing a separating force (arrows) to be exerted on each magnet 14 as shown in Figure 2. Each magnet 14 is therefore urged against its respective cap 16. The caps 16 prevent the magnets 14 from escaping from the bores 12. Figure 3 shows the fixing assembly in use with the ferromagnetic shaft 20 present. When the shaft 20 is inserted into the centre hole 18 the magnets 14 are magnetically attracted to the shaft 20, creating a gripping force on the shaft 20. This holds the fixing assembly 10 in place on the shaft 20 enabling it to rotate with the shaft 20.

The magnets 14 show in the above embodiment are permanent magnets obviously the fixing assembly 10 could be modified to accommodate magnets 14 that are electromagnets.

Various modifications of the invention as described will occur to the skilled person which will fall within the scope of the present invention as claimed.

## Claims

1. A fixing assembly for releasably attaching an element to a rotatable ferromagnetic shaft (20) comprising a non-magnetic annular housing (10) **characterised in that** the non-magnetic annular housing (10) comprises at least one substantially diametrically opposed pair of radial bores (12), the bores (12) each housing a magnet (14) with substantially the same dimensions as the bore (12) which is slideable within the bore (12), each magnet (14) being arranged so that its end nearest the axis of the annular housing (10) is the same pole.

2. A fixing assembly according to Claim 1, **characterised in that** each bore (12) is capped at the end nearest the outer surface of the annular housing (10).

3. A fixing assembly according to Claim 1 or Claim 2, **characterised in that** there are more than one pair of radial bores (12) and corresponding magnets (14).

4. A fixing assembly according to any preceding Claim, **characterised in that** the magnets (14) are permanent or electro-magnets.

5. A fixing assembly according to any preceding Claim, **characterised in that** the annular housing (10) is constructed from plastics material, aluminium or stainless steel.

## Patentansprüche

1. Befestigungsanordnung zum lösbaren Befestigen eines Elements an einer drehbaren ferromagnetischen Welle (20), die ein nichtmagnetisches ringförmiges Gehäuse (10) umfasst, **dadurch gekennzeichnet, dass** das nichtmagnetische ringförmige Gehäuse (10) wenigstens ein im Wesentlichen diametral einander gegenüberliegendes Paar radialer Löcher (12) umfasst, wobei die Löcher (12) jeweils einen Magnet (14) mit im Wesentlichen den gleichen Abmessungen wie das Loch (12) aufnehmen, der in dem Loch (12) gleiten kann, wobei jeder Magnet (14) so angeordnet ist, dass sein Ende, nächstliegend der Achse des ringförmigen Gehäuses (10), jeweils der gleiche Pol ist.

2. Befestigungsanordnung nach Anspruch 1, **dadurch gekennzeichnet, dass** jedes Loch (12) an dem Ende nächstliegend der äußeren Oberfläche des ringförmigen Gehäuses (10), verschlossen ist.

3. Befestigungsanordnung nach Anspruch 1 oder Anspruch 2, **dadurch gekennzeichnet, dass** es mehr als ein Paar radialer Löcher (12) und entsprechender Magneten (14) gibt.

4. Befestigungsanordnung nach einem der vorhergehenden Ansprüche, **dadurch gekennzeichnet, dass** die Magneten (14) Permanentmagneten oder Elektromagneten sind.

5. Befestigungsanordnung nach einem der vorhergehenden Ansprüche, **dadurch gekennzeichnet, dass** das ringförmige Gehäuse (10) aus Kunststoff, Aluminium oder Edelstahl konstruiert ist.

## Revendications

1. Moyen de fixation pour attacher de manière amovible un élément à un arbre rotatif ferromagnétique (20) comprenant une enveloppe annulaire non magnétique (10), **caractérisé en ce que** l'enveloppe annulaire magnétique (10) comprend au moins une paire d'alésages radiaux (12) substantiellement diamétralement opposés, les alésages (12) logeant chacun un aimant (14) avec substantiellement la même dimension que l'alésage (12) et pouvant coulisser à l'intérieur de l'alésage (12), chaque aimant (14) étant agencé de sorte que leur partie proche de l'axe de l'enveloppe annulaire (10) soit le même pôle.

2. Moyen de fixation selon la revendication 1, **caractérisé en ce que** chaque alésage (12) est fermé à son extrémité proche de la surface extérieure de l'enveloppe annulaire (10)

3. Moyen de fixation selon la revendication 1 ou la revendication 2, **caractérisé en ce qu'**il y a plus d'une paire d'alésages radiaux (12) et d'aimants (14) correspondants.

4. Moyen de fixation selon l'une quelconque des précédentes revendications, **caractérisé en ce que** les aimants (14) sont des aimants permanents ou des électro-aimants.

5. Moyen de fixation selon l'une quelconque des précédentes revendications, **caractérisé en ce que** l'enveloppe annulaire (10) est construite à partir de plastique, d'aluminium ou d'acier inoxydable.
